# EUROPEAN PATENT SPECIFICATION

(11) **EP 0 597 937 B1**
(45) Date of publication and mention of the grant of the patent: **11.10.1995**
(21) Application number: 92916464.8
(22) Date of filing: 07.08.1992
(51) Int. Cl.: B62H 1/12, B62H 1/06

(54) **STABILISER SYSTEM FOR VEHICLES**
STABILISIERUNGSVORRICHTUNG FÜR FAHRZEUGE
SYSTEME STABILISATEUR POUR VEHICULES

(30) Priority: 07.08.1991 GB 91169730; 16.03.1992 GB 92056969
(43) Date of publication of application: 25.05.1994
(73) Proprietor: SHEPHERD, Donald Welton, Dringhouses, York Y02 2QH (GB)
(72) Inventor: SHEPHERD, Donald Welton, Dringhouses, York Y02 2QH (GB)
(74) Representative: Robinson, Anthony John Metcalf
(86) International application number: GB9201466
(87) International publication number: WO9302907

(56) References cited:
- WO-A-90/09918
- CH-A- 183 362
- DE-A- 94 317
- FR-A- 2 546 840

## Description

The present invention relates to a stabiliser system for two wheeled vehicles, particularly vehicles which are powered by a rider. The invention relates most particularly, but not exclusively, to pedal bicycles and pedal-assisted bicycles.

The rider of a bicycle experiences frequent stops and starts in urban areas due to road intersections, slow moving traffic and traffic congestion, road works and other obstructions. These conditions are a common occurrence for cyclists in towns and in urban areas and can result in potentially dangerous situations where the cyclist has to stop precipitately and may lose his or her balance in the process.

In such traffic conditions, the cyclist has to put one or both feet on the ground at each stop and in many instances may have to dismount partially. The frequent and often abrupt stops and starts in traffic are highly inconvenient to the cyclist. They may also be potentially dangerous through loss of balance, impatient behaviour due to frustration and the like, particularly when the traffic includes heavy trucks.

The design of the pedal bicycle and the physical dimensions of the rider often result in saddle seats which are set either too low for maintaining efficient pedal pressure or too high for remaining in the saddle when at the halt. This can lead to frequent dismounting and remounting.

It is an object of the present invention to provide an improved stabilising system for a bicycle which enables the rider to bring the bicycle to a halt, without having to dismount.

There is described in WO90/09918 A1 a stabiliser system, particularly for bicycles, which incorporates an arm pivoted at its upper end at or adjacent the rear wheel spindle of the vehicle and having at its lower end a cross shaft carrying stabilisers and a wheel-engaging roller, and means for lowering the arm to draw the cross shaft beneath the wheel, so that the tyre on the wheel engages the roller and the wheel is lifted off the ground. With this arrangement a large part of the weight of the rider is transferred to the ground through the wheel, the roller, the cross shaft and the stabilisers.

The means for lowering the arm described in WO90/09918 A1 comprises a spool on the pedal spindle, the arm being lowered by back-pedalling to draw a cable from the lower end of the arm onto the spool. While this arrangement is satisfactory, some cyclists do not find back-pedalling as they come to the halt easy to control or achieve. Moreover, power to lower the arm has to be provided by the rider. Also, the arrangement, while capable of being designed to be added to an existing bicycle, is particularly suited to being fitted as original equipment. Accordingly it is an object of the present invention to provide, in a stabiliser system of the general construction described, an alternative means of lowering the arm which can deal with one or more of these points.

According to the present invention the means for lowering the arm comprises a rotary member such as a roller, rider-actuatable means for moving the rotatable member into engagement with a tyre on the said rear wheel of the vehicle to cause the rotary member to rotate, a spool rotatable by the rotary member, and a flexible element such as a cable windable on the spool and connected to the arm so that rotation of the spool draws the flexible element onto the spool and draws the roller beneath the wheel.

Preferably the rotary member and the spool are carried on a common shaft to rotate together and are preferably located ahead of the rear wheel. In a preferred construction, the shaft carries a second spool to rotate with the first spool, a length of cable running from each spool to the arm. The shaft may be carried by a swing arm pivoted at or adjacent one end to the frame of the vehicle about a horizontal axis, preferably to swing in a vertical plane coinciding with the plane of the rear wheel of the vehicle. The rider-actuatable means may comprise a cam acting on the swing arm and coupling means, such a Bowden cable, connected to manually operable means for operation by the rider, for example, a lever on the handlebars of the bicycle and arranged to rotate the cam to swing the arm. In one possible arrangement, the cam is mounted on a dependent element rigidly but possibly adjustably secured to the frame of the vehicle, the swing arm being pivoted adjacent the upper end of the dependent element. The swing arm and the dependent element may be mounted from the frame of the vehicle on a common pivot pin, the dependent element being also connected to the frame of the vehicle by a link, preferably of adjustable length, to locate the dependent element rigidly relative to the frame.

Although it is possible to incorporate a stabiliser system constructed according to the invention as original equipment, the invention is particularly suitable for stabilisers which may be retro-fitted to existing bicycles.

The invention may be carried into practice in various ways but one stabiliser system constructed in accordance with the invention will now be described by way of example with reference to the accompanying diagrammatic drawings, in which:
Figure 1 is a diagrammatic and fragmentary side elevation of the rear part of a bicycle with the stabiliser system fitted thereto and to a slightly smaller scale than Figures 2, 3 and 5;
Figure 2 is a fragmentary horizontal section which is taken approximately on the line II-II in Figure 3 but the section line has been adjusted in parts to show the construction more clearly;
Figure 3 is an enlarged side elevation partly broken away of the parts of the stabiliser system shown in Figure 2;
Figure 4 is a fragmentary plan view of the stabiliser system seen in the direction of the arrow IV in Figure 1; and
Figure 5 is a diagrammatic vertical section of the region indicated by the arrow V in Figure 1.

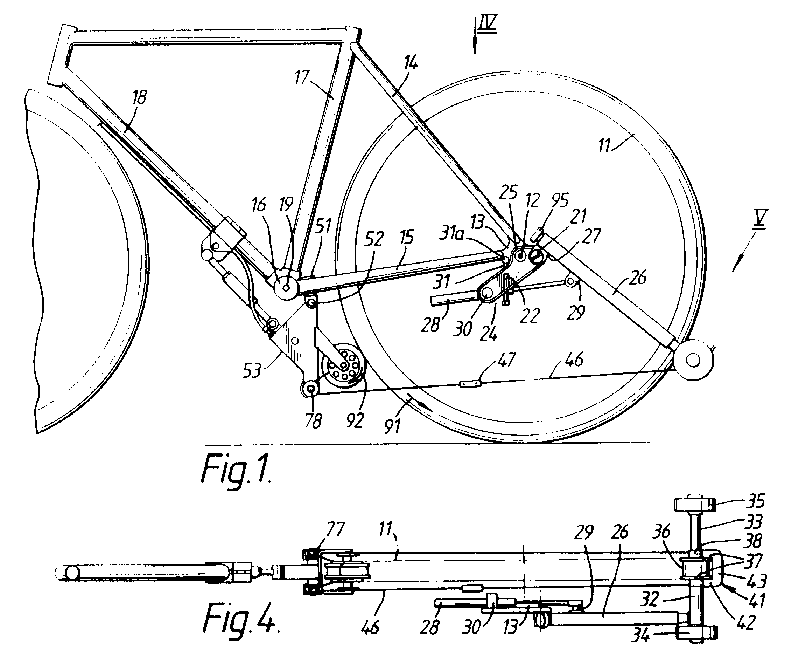

Figure 1 shows, in simplified form, the rear wheel 11 of a bicycle having a rear wheel hub 12 carried on each side in a gusset plate 13 which is welded to the ends of a seat stay 14 and a chain stay 15. The bicycle includes a bottom bracket 16 to which is connected the seat tube 17 and the down tube 18 and which provides bearings for the pedal spindle 19. The pedal spindle carries a chain wheel, not shown, and a chain passes around the chain wheel and the drive sprocket on the rear wheel hub 12. The bicycle includes a derailleur change speed gear which is not shown in the drawing but, alternatively, the bicycle could include a hub-type change speed gear or no gear change means.

Attached to the frame of the bicycle in the vicinity of the rear wheel hub 12 and on the side of the frame opposite to that of the drive sprocket is an elongate bracket 24 made as a flanged steel pressing. The bracket has an apertured ear 25 on its upper edge intermediate its length which is clamped by one of the rear wheel spindle nuts between this nut and the gusset plate 13. A stabiliser strut or arm 26 has at its upper end a lug 27 by which is is pivoted to a stub axle 21 at the rear end of the bracket 24 about a horizontal axis which is parallel to but is spaced rearwardly from the axis of the rear wheel spindle 12. The strut 26 is biased to the raised or inoperative position as shown in Figure 1 by a gas or other spring 28 which is pivoted at one end to a lug 29 intermediate the ends of the strut 26 and at another point intermediate its length to a stub axle 30 at the forward end of the bracket 25.

On the inner side of the bracket 24, and therefore not visible in Figure 1 and omitted from Figure 4, a mounting block is carried by a pin 22 rotatable in the bracket, the block having a threaded aperture through which is threaded a bolt 31 having at its upper end an abutment block 31a which is pivoted to the bolt for rotation about the longitudinal axis of the bolt. The block 31a is formed with a notch to receive the lower edge of the gusset plate 13. The mounting block, the bolt 31 and the abutment block 31a constitute an adjustable stop which transfers loads acting clockwise (as seen in Figure 1) from the strut 26 to the frame of the bicycle and permits adjustment of the location of the strut as will be described below.

The lower end of the strut 26 carries a sleeve 32 (Figure 4) in which a hollow cross shaft 33 is rigidly secured. Opposite ends of the shaft 33 carry freely rotatable ground engaging stabiliser wheels 34,35. In the central region of the shaft 33 there is a freely rotatable roller 36 which is generally aligned with the plane of the wheel 11 and has flanges 37 which are spaced apart so as snugly to engage the opposite sides of the tyre when the stabiliser is in operation as will be described below.

On either side of the roller 36 there is a pair of sleeves 38 which are rigidly secured by pins 39 to the shaft 33 and a shaped cable guide plate 41 is secured to these sleeves. The plate 41 is generally C-shaped having a pair of spaced limbs 42 which are curved at their extremities as can be seen in Figure 5 so as to correspond to the curvature of the outer surface of the sleeves 38 and a generally rectangular connecting portion 43. A pair of gussets 44 are secured to the sleeves 38 and to the plate 41 to provide stiffening. The outer edge of the plate 41 is formed with a relatively deep groove 45 to provide a guide for a cable 46, the cable being a loose fit in the groove so that it may slide along the groove in either direction, the curvature of the outer ends of the limbs 42 of the plate 41 providing a convenient transition zone at each end of the groove 45 as can be seen in Figure 5. The cable 46 is formed into an endless loop by means of a single connector 48 which joins the two ends of the loop and provides a means for adjusting the length of the loop.

The angling of the plate 41 (as viewed in Figures 1 and 5) serves two purposes. Firstly, it keeps it clear of the ground as the strut 26 is moved to the operative position as will be described, even with a partially or fully deflated tyre. Secondly, the path of the cable 46 changes direction as it enters and leaves the groove 45 and is partially wrapped around the sleeves 38. The sleeves 38 are non-rotatable so that friction is developed between the sleeves 38 and the cable 46, thus reducing the load imparted by the cable to the plate 41. While this friction is advantageous in reducing the load applied to the plate 41, it should not be so great as to prevent the cable slipping lengthwise of itself in order substantially to equalise the tension in the parts of the cable on opposite sides of the bicycle. The amount by which the plate 41 is angled will be selected to produce an appropriate amount of friction around the sleeves 38 while producing the required ground clearance for the plate 41.

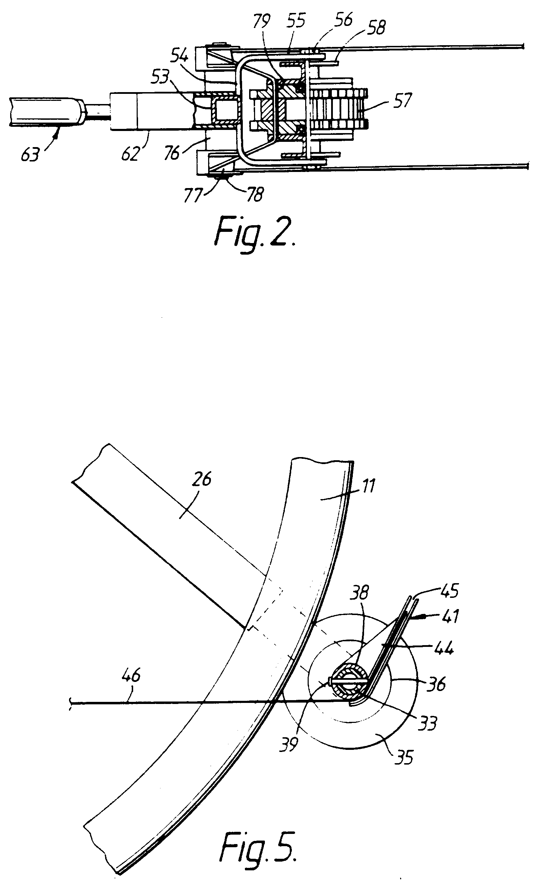

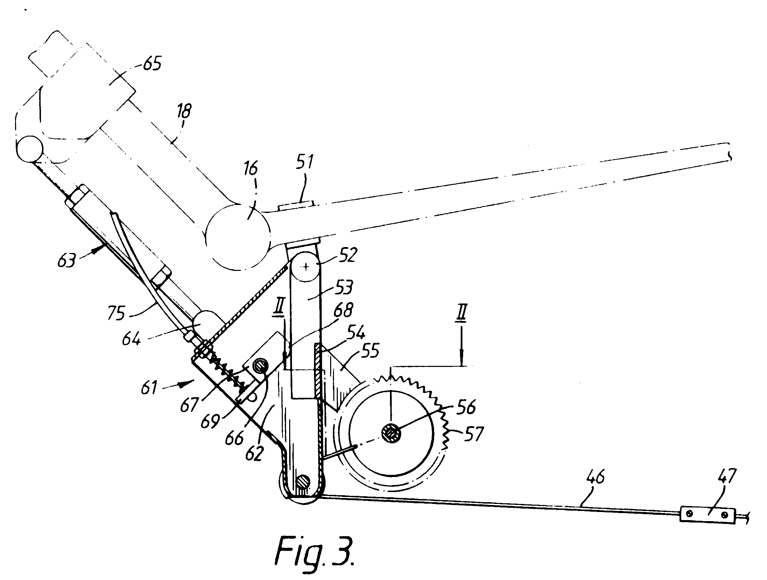

Clamped to the forward ends of the chain stays 15 adjacent the bottom bracket 16 is an adjustable anchorage 51 carrying a central horizontal pivot 52 for the upper end of a swing arm 53 (Figures 2 and 3) which is able to pivot in the plane of the rear wheel 11.

The swing arm, which is formed of a square tube, carries at its lower end a U-shaped bracket 54 having a pair of rearwardly and downwardly directed arms 55 having apertures containing bearings in which a spindle 56 is journalled. A tyre engaging rotary member or wheel 57 and a pair of spools or winches 58 are rigidly secured to the spindle 56 between the two arms 55. The wheel 57 has outer flanges 57a and a central groove 57b all of which are formed with teeth to achieve a good entrainment between the tyre and the wheel, this being assisted by the fact that the teeth on the flanges are displaced by half a tooth pitch around the circumference relative to the teeth in the groove.

In the construction being described, the diameter of the tyre-engaging wheel 57 is approximately six times that of the base of the groove in each of the spools 58. It is desirable to make the wheel 57 and the spools 58 as large as convenient but the size is of course limited by the geometry of the surrounding parts of the bicycle. Large diameters reduce the speed of rotation, increase the torque available, reduce the risk of the wheel 57 slipping on the tyre and ensure that the cable 46 lays neatly on the spools as will be described.

The stabiliser system includes an actuator means which includes a stator unit 61 which comprises a box member 62 which is of generally triangular elevation and is pivoted at its upper corner on the pivot 52 on the bracket 51 and is held in position by an adjustable length strut 63 pivoted at one end to a lug 64 on the box member 62 and at the other end to an adjustable clamp 65 on the down tube 18. A transverse pin 66 extending between the side walls of the box member 62 carries a cam 67 which has a lobe 68 engaging the swing arm 53 and an arm 69 receiving one end of the core of a Bowden cable 75. This cable extends to a manually operable control lever (not shown) on the handlebars of the bicycle. The sheath of the Bowden cable is adjustably secured to the front wall of the box member 62. For purposes to be described below, the actuator lever on the handlebars has a latching operative position and a secondary lever by which the actuator lever can be released from its operative position.

Extending from each side of the box member 62 adjacent its bottom are housings 76 containing tapered flanged guide pulleys 77 which are rotatable on a cross-shaft 78.

The run of the cable 46 is best seen in Figures 2, 4 and 5 and is as follows. From one end of the groove 45 in the cable guide plate 41, the cable extends forward to one of the guide pulleys 77 and then rearwardly to one of the spools 58. It then passes through a bore 79 extending through the inner flange of the said spool, the tyre-engaging wheel 57 and the inner flange of the other spool 58. From this spool, the cable passes around the other guide pulley 77 and extends rearwardly to the other end of the groove 45 and along the groove to complete the loop. The housings 76 have windows to permit passage of the cable 46 to and from the pulleys 77.

Operation of the stabiliser is as follows. During normal riding, the stabiliser system is in the condition shown in Figure 1 with the strut 26 in the raised position. It is maintained in this position by the gas spring 28 tending to pivot the strut 26 in the anti-clockwise direction as seen in Figure 1, such movement being prevented by tension in the cable 46. When the rider comes near to stopping and wishes to be supported by the stabiliser system when he comes to a halt, he operates the control lever on the handlebars by moving it from the inoperative position to the operative position. This causes the cam 67 to rotate in a clockwise direction as seen in Figures 1 and 3 so that the cam lobe 68 causes the swing arm 53 to swing counter-clockwise as seen in Figures 1 and 3 to bring the roller 57 into engagement with the tyre of the wheel 11 which is rotating in the direction of the arrow 91. This causes the roller 57 to rotate in the direction of the arrow 92, the spools 58 rotating in the same direction and winding in the cable 46. This causes the strut 26 to move from the inoperative position seen in Figure 1 to an operative position beneath the wheel 11 causing the stabiliser wheels 34,35 to engage the ground and the roller 36 to engage the tyre of the wheel 11, both because of the eccentric mounting of the upper end of the strut 26 relative to the axis of rotation of the wheel 11 and because of a degree of compressibility in the strut 26 which is of spring-loaded telescopic construction. As the ground engaging wheels 34,35 and the tyre-engaging roller 36 move under the wheel 11 the bicycle wheel 11 is lifted off the ground, the arm 26 continuing to move clockwise until it is unable to move any further. The rider will time this to occur substantially at the time the bicycle comes to a halt. The weights of the rider and of the bicycle are largely transferred to the ground through the tyre, the roller 36 and the wheels 34 and 35 but a small proportion of this weight will be transmitted through the strut 26. It will be seen that the stabiliser device will, provided that the bicycle is maintained approximately upright, support the bicycle in the upright position without the rider having to place a foot on the ground. It is also possible for the rider to dismount and to leave the bicycle in a parked condition.

The telescopic strut 26 has adjustment means, in this particular case a screw-threaded rod having a turn-key 95 at its upper end by which the pre-compression of a variable rate spring provided between the two telescoping parts of the strut can be adjusted, in order to accommodate riders of different weights.

When the rider wishes to move off, the control lever on the handlebars is released thus causing the cam 67 to retract to allow the swing arm 53 to move clockwise as seen in Figure 3 to release the wheel 57 from the tyre of the wheel 11 and removing the restraint on rotation of the spools 58. A spring may be provided to bias the swing arm clockwise to encourage movement of the wheel 57 away from the tyre. The strut 26 then moves back towards the retracted position under the influence of the gas spring 28 and the tendency of the bicycle to move forwards as the rear wheel drops off the roller 36 once the bicycle brakes have been released. Simultaneously the rider rotates the pedals and rides away smoothly.

Since the cable is able to move longitudinally in the groove 45 in the plate 41, the stabiliser system will be stressed approximately evenly by the two limbs of the cable 46 so that it is not necessary to ensure that initially the two limbs are of equal length and any differential takeup between the two spools 58 or any differential stretch in the two limbs of the cable will be self compensated.

During initial setting up of the stabiliser system, the adjustable stop afforded by the bolt 31 is adjusted to position the bracket 4 and hence the lug 27 appropriately so that, because of the eccentricity between the pivotal axis of the strut 26 and the axis of the rear wheel hub 12, the roller 36 is sufficiently spaced from the tyre when the strut is in its retracted position but is sufficiently close to the axis of the rear wheel hub 12 when the strut is in the operative position for the bicycle wheel to be lifted off the ground by the roller 36, taking account of the compressibility of a properly inflated tyre.

If the tyre should be partially deflated, the strut 26 will be able to move forwardly beyond the operative position and, in the case of a fully deflated tyre, reach a position in which the strut is forward of the vertical and the weight of the rider is transferred to the roller 36 essentially through the rim of the wheel and the flattened walls of the tyre. Thus, the stabiliser system will still be operative and the strut 26 will not be excessively stressed. However, it may not be possible for the rider to move off from the halt at all easily as this will require the rear wheel to ride over the roller 36. This will provide the rider with a clear indication that the tyre is under-inflated.

Although the construction is such that all the major forces on the bracket 24 combine always to produce a clockwise torque on the bracket (as seen in Figure 1) it is possible that on some occasions, such as riding over a large stone or pot hole or down a kerb, a net counter-clockwise force may exist for a moment leading to bounce of the strut 26 and a disengagement of the abutment block 31a from the gusset plate 13. This could be prevented by the provision of a second adjustable stop (similar to that constituted by the mounting block, bolt 31 and abutment block) mounted on the short arm of the bracket 24 and engaging the gusset plate 13 to the rear of the rear wheel spindle 12. Such a second adjustable stop can be of lighter construction than the first as it does not take any operational loads.

It will be appreciated that various modifications and additions to the construction described can be made and a number will now be described.

In the system shown in the drawings, see Figure 2, the cable 46 passes through a bore 79 extending through the inner flanges of the two spools and the tyre engaging wheel 57. With this construction it is essential that the entries to the bore in the two inner spool flanges are suitably flared to avoid damage to the cable. In an alternative construction, grooves are provided in the peripheries of the two inner flanges of the spools 58 and in the periphery of the wheel 57 and means such as returns at the bottoms of the grooves or cover plates retained by screws are provided for holding the cable within the grooves. Such a construction has the advantage over the bore 79 that it is not necessary to have access to an end of the cable 46 to pass it through the bore 79, the cable 46 can merely be laid in the groove at any point along its length so that it is possible to provide the cable 46 initially in a closed loop. This facility installation by mechanically unskilled bicycle owners.

Although it is stated that the preferred ratio of the diameters of the wheel 57 and the spools 58 is 6:1, other ratios between 2:1 and 10:1, for example, may be employed; larger diameters of spools are preferred to increase the radius of wrap of the cable on the spool but it will be appreciated that the larger the diameter of the spool the smaller the increase in power that can be applied to the cable.

Although the bracket has been described as being a pressing it could alternatively be a metal forging or of some other construction.

Although the strut 26 is described as having means 95 for adjusting the precompression of the spring between the telescoping parts of the strut this may not be necessary. However it may be desirable to provide means for adjusting the initial length of the strut so that a single construction of strut can be adapted to bicycles of different sizes.

In order to prevent the strut 26 swinging too far to the left as seen in Figure 1 when the stabiliser device is operated, limiting means may be provided, preferably on the gas strut 28. Thus the cylinder of the gas strut may have an internal stop which is engaged by the piston or the piston rod may have a stop which engages the end of the cylinder of the gas strut. In either case a compression spring may be provided to prevent excessive shock as the end position is approached.

Certain features of the construction described may call for some emphasis. Thus it should be noted that the gas strut 28 is pivoted to the bracket 24 at a point intermediate the length of the cylinder of the gas strut and nearer to the piston rod entry end than the closed end, by contrast with the usual mounting of a gas strut which is at each end. It will also be noted that the abutment block 31a on the bolt 31 engages the gusset plate 13 which is an element of considerable strength rather than a point along the length of the chain stay 15 which is a relatively thin tube and ill-adapted to resist laterally applied forces.

Finally it should be noted that the provision of the single horizontal pivot 52 for the swing arm 53 and the stator unit 61 facilitates rapid adaptation of the stabiliser system to bicycles of different sizes and geometry.

## Claims

1. A stabiliser system for two-wheeled vehicles comprising an arm pivoted at its upper end at or adjacent the rear wheel spindle of the vehicle and having at its lower end a cross shaft carrying stabilisers and a wheel-engaging roller, and means for lowering the arm to draw the cross shaft beneath the wheel so that the tyre on the wheel engages the roller and the wheel is lifted off the ground, the lowering means comprising: a rotary member, rider-actuatable means for moving the rotatable member into engagement with a tyre on the said rear wheel of the vehicle to cause the rotary member to rotate, a spool rotatable by the rotatable member, and a flexible element windable on the spool and connected to the arm so that rotation of the spool draws the flexible element onto the spool and draws the roller beneath the wheel.

2. A stabiliser system as claimed in claim 1 in which the rotary member and the spool are carried on a common shaft to rotate together.

3. A stabiliser system as claimed in claim 2 in which the shaft carries a second spool to rotate with the first spool, and a second flexible element windable on the second spool and connected to the arm.

4. A stabiliser system as claimed in claim 3 in which the two flexible elements are parts of a single cable extending from one spool around a guide carried by the ross-shaft to the other spool.

5. A stabiliser system as claimed in claim 4 in which the cable forms a closed loop and passes direclty from one spool to the other as well as via the guide.

6. A stabiliser system as claimed in claim 3 or claim 4 or claim 5 in which each cable extends from its respective spool forwardly and around a front guide and then rearwardly to the arm.

7. A stabiliser system as claimed in claim 6 in which the front guides are spaced apart laterally from one another by a greater lateral distance than the lateral spacing of the spools from one another.

8. A stabiliser system as claimed in claim 7 in which the front guides are rollers which are tapered so as to be of increasing diameter towards the centre line of the vehicle.

9. A stabiliser system as claimed in any of claims 2 to 8 in which the rotary member and the or each spool are located ahead of the rear wheel.

10. A stabiliser system as claimed in any of claims 2 to 9 in which the shaft is carried by a swing arm pivoted at or adjacent one end to the frame of the vehicle about a horizontal axis.

11. A stabiliser system as claimed in claim 10 in which the swing arm swings in a vertical plane coinciding with the plane of the rear wheel of the vehicle.

12. A stabiliser system as claimed in claim 10 or claim 11 in which the rider-actuatable means comprises a cam acting on the swing arm and coupling means connected to manually operable means for operation by the rider.

13. A stabiliser system as claimed in claim 10 or claim 11 or claim 12 in which the cam is mounted on a dependent element rigidly secured to the frame of the vehicle, the swing arm being pivoted adjacent the upper end of the dependent element.

14. A stabiliser system as claimed in claim 14 in which the swing arm and the dependent element are mounted from the frame of the vehicle on a common pivot pin.

15. A stabiliser system as claimed in claim 14 in which the dependent element is also connected to the frame by a link to locate the dependent element rigidly relative to the frame.

16. A stabiliser system as claimed in any of claims 1 to 15 in which the arm is pivoted to a rearwardly extending portion of a bracket having an aperture intermediate its length to receive the rear wheel spindle, a spring extends between a forwardly extending portion of the bracket and a point on the arm below the point at which the arm is pivoted to the bracket, and the bracket carries, forward of the aperture, a stop engaging the frame of the vehicle and preventing rotation of the bracket about the rear wheel spindle in a direction to raise the forwardly extending portion.

17. A stabiliser system as claimed in claim 16 in which the stop is adjustable to raise and lower the axis of the pivot between the arm and the bracket.

18. A stabiliser system as claimed in claim 16 or claim 17 in which the bracket has a short limb to which the arm is pivoted and a long limb to which the spring is pivoted.

19. A stabiliser system substantially as described herein with reference to the accompanying drawings.

20. A combination comprising a bicycle and a stabiliser system, the stabiliser system being as claimed in any of claims 1 to 19.

## Patentansprüche

1. Stabilisierungsvorrichtung für zweirädrige Fahrzeuge, mit einem Arm, der an seinem oberen Ende an oder angrenzend an die Achse des Hinterrades des Fahrzeuges angelenkt ist und an seinem unteren Ende eine Querstange aufweist, welche die Stabilisierungselemente und eine Radeingriffsrolle trägt, sowie mit Mitteln zum Absenken des Armes, um die Querstange unter das Rad zu ziehen, so daß der Reifen des Rades mit der Rolle in Eingriff gelangt und das Rad vom Boden abgehoben wird, welches Absenkungsmittel ein Drehelement, ein durch den Fahrer betätigbares Element, das dazu dient, das drehbare Element mit einem Reifen an dem Hinterrad des Fahrzeuges in Eingriff zu bringen, um das Drehelement in Drehung zu versetzen, eine Spule, die durch das drehbare Element in Drehung versetzbar ist, und ein biegsames Element aufweist, das auf die Spule aufwickelbar und mit dem Arm verbunden ist, so daß die Drehung der Spule das biegsame Element auf die Spule zieht und die Rolle unter das Rad zieht.

2. Stabilisierungsvorrichtung nach Anspruch 1, wobei das Drehelement und die Spule von einer gemeinsamen Welle zur gemeinsamen Drehung getragen werden.

3. Stabilisierungsvorrichtung nach Anspruch 2, wobei die Welle eine zweite Spule trägt, um mit der ersten Spule zu rotieren, und ein zweites biegsames Element, das auf die zweite Spule aufwickelbar und mit dem Arm verbunden ist.

4. Stabilisierungsvorrichtung nach Anspruch 3, wobei die beiden biegsamen Elemente Teile eines einzigen Kabels sind, das von einer Spule um eine Führung, die von der Querstange getragen wird, zu der anderen Spule läuft.

5. Stabilisierungsvorrichtung nach Anspruch 4, wobei das Kabel eine geschlossene Schlinge bildet und direkt von einer Spule zu der anderen wie auch über die Führung läuft.

6. Stabilisierungsvorrichtung nach Anspruch 3 oder Anspruch 4 oder Anspruch 5, wobei jedes Kabel von seiner entsprechenden Spule vorwärts und um eine vordere Führung und dann zu dem Arm zurück läuft.

7. Stabilisierungsvorrichtung nach Anspruch 6, wobei die vorderen Führungen seitlich voneinander in größerem Abstand entfernt sind als der gegenseitige seitliche Abstand der Spulen.

8. Stabilisierungsvorrichtung nach Anspruch 7, wobei die vorderen Führungen Rollen sind, die so verjüngt sind, daß sie zu der Mittellinie des Fahrzeuges hin einen zunehmenden Durchmesser aufweisen.

9. Stabilisierungsvorrichtung nach einem der Ansprüche 2 bis 8, wobei das Drehelement und die oder jede Spule vor dem Hinterrad angeordnet sind.

10. Stabilisierungsvorrichtung nach einem der Ansprüche 2 bis 9, wobei die Welle von einem Schwenkarm getragen wird, der an oder nahe einem Ende des Rahmens des Fahrzeuges um eine waagrechte Achse angelenkt ist.

11. Stabilisierungsvorrichtung nach Anspruch 10, wobei der Schwenkarm in einer senkrechten Ebene schwingt, die mit der Ebene des Hinterrades des Fahrzeuges übereinstimmt.

12. Stabilisierungsvorrichtung nach Anspruch 10 oder Anspruch 11, wobei das durch den Fahrer betätigbare Element eine Nocke umfaßt, die auf den Schwenkarm wirkt, und Kupplungsmittel, die mit manuell bedienbaren Mitteln verbunden sind, welche vom Fahrer betätigt werden.

13. Stabilisierungsvorrichtung nach Anspruch 10 oder Anspruch 11 oder Anspruch 12, wobei die Nocke an einem abwärtshängenden Element montiert ist, das starr an dem Rahmen des Fahrzeuges befestigt ist, wobei der Schwenkarm angrenzend an das obere Ende des abwärtshängenden Elements angelenkt ist.

14. Stabilisierungsvorrichtung nach Anspruch 14, wobei der Schwenkarm und das abwärtshängende Element an dem Rahmen des Fahrzeuges an einem gemeinsamen Drehstift befestigt sind.

15. Stabilisierungsvorrichtung nach Anspruch 14, wobei das abwärtshängende Element auch mit dem Rahmen durch ein Zwischenstück verbunden ist, um das abwärtshängende Element in bezug auf den Rahmen starr anzuordnen.

16. Stabilisierungsvorrichtung nach einem der Ansprüche 1 bis 15, wobei der Arm an einem sich nach rückwärts erstreckenden Teil einer Halterung angelenkt ist, die in ihrer lange eine Öffnung aufweist, um die Achse des Hinterrades aufzunehmen, wobei eine Feder zwischen einem sich nach vorne erstreckenden Teil der Halterung und einem Punkt an dem Arm unterhalb des Punktes, an dem der Arm an der Halterung angelenkt ist, verläuft, und die Halterung vor der Öffnung einen Anschlag trägt, der mit dem Rahmen des Fahrzeuges in Eingriff steht und verhindert, daß sich die Halterung um die Achse des Hinterrades in eine Richtung zum Anheben des sich nach vorne erstreckenden Teiles dreht.

17. Stabilisierungsvorrichtung nach Anspruch 16, wobei der Anschlag zum Anheben und Senken der Achse des Drehzapfens zwischen dem Arm und der Stütze einstellbar ist.

18. Stabilisierungsvorrichtung nach Anspruch 16 oder Anspruch 17, wobei die Halterung ein kurzes Glied aufweist, an dem der Arm angelenkt ist, und ein langes Glied, an dem die Feder angelenkt ist.

19. Stabilisierungsvorrichtung wie im wesentlichen hierin mit Bezugnahme auf die beiliegenden Zeichnungen beschrieben.

20. Kombination, umfassend ein Fahrrad und eine Stabilisierungsvorrichtung, welche Stabilisierungsvorrichtung wie in einem der Ansprüche 1 bis 19 definiert ist.

## Revendications

1. Système stabilisateur pour véhicules à deux roues comprenant un bras monté à pivotement à son extrémité supérieure au niveau de l'axe de la roue arrière du véhicule ou à proximité de celui-ci et comportant, à son extrémité inférieure, un arbre transversal portant des stabilisateurs et un galet qui attaque la roue, et un moyen pour abaisser le bras afin de tirer l'arbre transversal sous la roue, de telle sorte que le pneu prévu sur la roue attaque le galet et que la roue soit soulevée du sol, le moyen d'abaissement comprenant :
un organe rotatif;
un moyen actionnable par l'utilisateur pour amener l'organe rotatif en contact avec un pneu sur ladite roue arrière du véhicule afin que l'organe rotatif tourne;
un tambour qui peut être mis en rotation par l'organe rotatif, et
un élément flexible qui peut être enroulé sur le tambour et qui est relié au bras, de telle sorte que la rotation du tambour tire l'élément flexible sur le tambour et tire le galet sous la roue.

2. Système stabilisateur suivant la revendication 1, dans lequel l'organe rotatif et le tambour sont montés sur un arbre commun afin de tourner ensemble.

3. Système stabilisateur suivant la revendication 2, dans lequel l'arbre porte un deuxième tambour destiné à tourner avec le premier tambour, et un deuxième élément flexible qui peut être enroulé sur le deuxième tambour et qui est relié au bras.

4. Système stabilisateur suivant la revendication 3, dans lequel les deux éléments flexibles sont des parties d'un câble unique qui part d'un tambour, passe autour d'un guide porté par l'arbre transversal et aboutit à l'autre tambour.

5. Système stabilisateur suivant la revendication 4, dans lequel le câble forme une boucle fermée et passe directement d'un premier tambour à l'autre ainsi qu'à travers le guide.

6. Système stabilisateur suivant la revendication 3 ou la revendication 4 ou la revendication 5, dans lequel chaque câble part de son tambour respectif, vers l'avant, passe autour d'un guide avant, puis s'étend vers l'arrière jusqu'au bras.

7. Système stabilisateur suivant la revendication 6, dans lequel les guides avant sont espacés latéralement l'un de l'autre d'une distance latérale supérieure à l'espacement latéral relatif des tambours.

8. Système stabilisateur suivant la revendication 7, dans lequel les guides avant sont des poulies coniques dont le diamètre va en augmentant vers l'axe du véhicule.

9. Système stabilisateur suivant l'une quelconque des revendications 2 à 8, dans lequel l'organe rotatif et le ou chaque tambour sont placés devant la roue arrière.

10. Système stabilisateur suivant l'une quelconque des revendications 2 à 9, dans lequel l'arbre est porté par un bras pivotant monté à pivotement au niveau d'une extrémité ou à proximité de celle-ci sur le cadre du véhicule autour d'un axe horizontal.

11. Système stabilisateur suivant la revendication 10, dans lequel le bras pivotant pivote dans un plan vertical qui coïncide avec le plan de la roue arrière du véhicule.

12. Système stabilisateur suivant la revendication 10 ou la revendication 11, dans lequel le moyen actionnable par l'utilisateur comprend une came qui agit sur le bras pivotant et un moyen d'accouplement relié à un organe actionnable manuellement par une intervention de l'utilisateur.

13. Système stabilisateur suivant la revendication 10 ou la revendication 11 ou la revendication 12, dans lequel la came est montée sur un élément suspendu fixé rigidement au cadre du véhicule, le bras pivotant étant monté à pivotement à proximité de l'extrémité supérieure de l'élément suspendu.

14. Système stabilisateur suivant la revendication 13, dans lequel le bras pivotant et l'élément suspendu sont montés sur le cadre du véhicule sur un pivot commun.

15. Système stabilisateur suivant la revendication 14, dans lequel l'élément suspendu est également relié au cadre par une biellette destinée à maintenir l'élément suspendu rigidement en place par rapport au cadre.

16. Système stabilisateur suivant l'une quelconque des revendications 1 à 15, dans lequel le bras est monté à pivotement sur une partie s'étendant vers l'arrière d'un support présentant une ouverture à un endroit situé entre ses extrémités pour recevoir l'axe de la roue arrière, un ressort s'étend entre une partie du support s'étendant vers l'avant et un point sur le bras situé en dessous du point de pivotement du bras sur le support et le support porte, en avant de l'ouverture, un arrêt qui attaque le cadre du véhicule et qui empêche le support de tourner autour de l'axe de la roue arrière dans un sens tendant à relever la partie s'étendant vers l'avant.

17. Système stabilisateur suivant la revendication 16, dans lequel l'arrêt peut être réglé pour élever et abaisser l'axe du pivot entre le bras et le support.

18. Système stabilisateur suivant la revendication 16 ou la revendication 17, dans lequel le support présente une partie courte sur laquelle le bras est monté à pivotement et une partie longue sur laquelle le ressort est monté à pivotement.

19. Système stabilisateur en substance comme décrit plus haut avec référence aux dessins annexés.

20. Combinaison comprenant une bicyclette et un système stabilisateur, le système stabilisateur étant conforme à l'une quelconque des revendications 1 à 19.
